# DEMANDE DE BREVET EUROPEEN

(11) **EP 0 720 931 A1**
(43) Date de publication de la demande: **10.07.1996**
(21) Numéro de dépôt: 95402654.8
(22) Date de dépôt: 27.11.1995
(51) Int. Cl.: B60P 3/035, B65H 75/08

(54) **Dispositif de relevage automatique d'un dévidoir**

(30) Priorité: 13.12.1994 FR 9415212
(71) Demandeur: GIAT INDUSTRIES, F-78000 Versailles (FR)
(72) Inventeur: Gatinet, Alain, F-42720 Briennon (FR)

(57) **Abrégé**

L'invention concerne un dispositif pour assurer la manutention automatique d'au moins un dévidoir (**2**) destiné à être chargé et déchargé d'un véhicule. Le dispositif comporte :
- un vérin de manutention (**11**) monté pivotant sur le véhicule (**1**), sensiblement selon le plan vertical,
- un système de verrouillage (**27**) du dévidoir monté sur une structure de prise en charge (**13**) et se trouvant adapté pour être verrouillé sur le cadre du dévidoir,
- et une structure de prise en charge (**13**) montée articulée sur le véhicule, sensiblement dans le plan vertical, et se trouvant constituée par un châssis surplombant, destiné, lorsque les fourchettes (**8**) du dévidoir sont engagées sur les axes de pivotement (**20**), à chevaucher le dévidoir (**2**), de façon que ce dernier puisse être verrouillé au châssis (**13**) avant son relevage par le vérin (**11**).

## Description

La présente invention concerne le domaine technique de la manutention de charges au sens général et se présentant, plus précisément, sous la forme d'un dévidoir.

L'objet de l'invention trouve une application particulièrement avantageuse dans le domaine du chargement et du déchargement des dévidoirs mobiles équipant les véhicules de pompiers.

Une catégorie de véhicules de pompiers est connue pour être équipée, en général, de deux dévidoirs mobiles destinés à être supportés par la partie arrière du véhicule et à être séparés du véhicule lors de leur utilisation. Chaque dévidoir se présente sous la forme d'un chariot à deux roues dont l'essieu supporte un tambour de réception de tuyaux. L'essieu est également muni d'un cadre, à partir duquel s'élève une flèche terminée par une traverse formant poignée de manipulation.

Le chargement et le déchargement d'un dévidoir mobile sur un véhicule représentent des opérations relativement délicates à mener à bien en raison, notamment, du poids qu'il représente pouvant atteindre 150 à 200 kg et de l'obligation de placer le dévidoir à un niveau donné pour disposer d'une garde au sol suffisante lors du roulage du véhicule. Pour faciliter la manutention manuelle d'un tel dévidoir, il a été prévu d'équiper le cadre, au-delà de l'essieu et entre chaque roue et chaque flasque du tambour, d'un bras terminé par une fourchette destinée à venir s'engager sur un axe horizontal de pivotement porté par le véhicule. Lors du relevage du dévidoir, l'utilisateur engage les fourchettes du dévidoir sur les axes de pivotement et assure le pivotement du dévidoir dans un plan sensiblement vertical pour amener la traverse de manipulation à proximité de la caisse arrière du véhicule. La traverse de manipulation du dévidoir est alors bloquée par un dispositif de verrouillage adapté, monté sur la caisse arrière du véhicule. Même si l'effet du bras de levier permet de diminuer l'effort développé, il se trouve qu'une telle manipulation nécessite un effort important et s'avère difficile à mener à bien en raison de la difficulté d'atteindre, notamment, le point de verrouillage du dévidoir sur le véhicule. En effet, pour être verrouillée, la traverse de manipulation doit être amenée dans une position dépassant largement le plan vertical. Par ailleurs, le déchargement impose de déverrouiller le cadre tout en le reculant et en le maintenant pour éviter sa chute. Il doit donc être constaté que le chargement et le déchargement d'un dévidoir sur un véhicule représentent des manipulations difficiles et dangereuses pour les utilisateurs.

Pour tenter de supprimer les inconvénients liés à la manipulation manuelle, il a été proposé un dispositif de manutention automatique des dévidoirs comportant un vérin hydraulique et/ou électrique de manutention, monté sur le véhicule et piloté par un circuit de commande. La tige du vérin est articulée sur une structure de prise en charge du dévidoir, déplacée par le vérin dans un plan vertical du véhicule. La structure de prise en charge se compose de deux paires de bras dont la paire supérieure est fixée au véhicule, tandis que la paire inférieure est déplacée en pivotement par le vérin. Les bras inférieurs sont équipés, chacun, d'un axe de réception pour une fourchette et d'une demi-coquille destinée à s'engager en dessous des parties terminales de l'essieu du dévidoir. Les bras inférieurs sont déplacés de façon que leurs demi-coquilles viennent coopérer avec les demi-coquilles portées par les bras supérieurs. En position relevée du dévidoir, les demi-coquilles sont verrouillées entre elles par un dispositif approprié.

Il apparaît qu'un tel dispositif ne donne pas satisfaction pour les raisons suivantes.

En effet, il doit être considéré que le dévidoir, lors de ces opérations de manutention, ne se trouve pas verrouillé sur la structure de prise en charge, mais repose uniquement sur cette dernière. Il s'ensuit une insécurité manifeste, dans la mesure où le dévidoir est à même, lors de son chargement ou de son déchargement, de tomber de la structure de prise en charge, en raison du positionnement incorrect des fourchettes et/ou des demi-coquilles en dessous des parties terminales de l'essieu. Un tel dispositif ne permet donc pas d'assurer, en toute sécurité, les opérations de chargement et de déchargement du dévidoir. De plus, ce dispositif ne se trouve pas adapté pour assurer la prise en charge de tous les types de dévidoirs, dans la mesure où les essieux sont susceptibles de présenter des diamètres différents. La manutention de divers types de dévidoirs impose de disposer d'un jeu de demi-coquilles adaptées à la taille de l'essieu.

L'objet de l'invention vise à remédier aux inconvénients énoncés ci-dessus en offrant un dispositif permettant d'assurer la manutention automatique de tous types de dévidoirs et présentant une complète sécurité lors des opérations de chargement et de déchargement.

Pour atteindre cet objectif, le dispositif selon l'invention comporte :
- un vérin de manutention monté sur le véhicule et piloté par un circuit de commande,
- une structure de prise en charge du dévidoir, montée articulée sur le véhicule en étant destinée à être déplacée par le vérin dans un plan vertical du véhicule, la structure comportant deux axes de pivotement pour des fourchettes équipant le cadre du dévidoir,
- et un système de verrouillage monté sur la structure de prise en charge et adapté pour verrouiller le dévidoir sur la structure de prise en charge.

Selon l'invention, le dispositif pour assurer la manutention automatique d'au moins un dévidoir est caractérisé en ce que :
- le vérin de manutention est monté pivotant sur le véhicule, sensiblement selon le plan vertical,
- et la structure de prise en charge est constituée par un châssis surplombant, destiné, lorsque les fourchettes du dévidoir sont engagées sur les axes de pivotement, à chevaucher le dévidoir, de façon que ce dernier, disposé en position de roulage, puisse être verrouillé au châssis avant son relevage par le vérin.

Selon une autre caractéristique de l'invention, le dispositif de manutention comporte un verrou de sécurité adapté pour assurer le verrouillage de la structure sur le véhicule, en position de roulage.

Une autre caractéristique du dispositif selon l'invention concerne le fait qu'il ne nécessite pas la mise en oeuvre, à l'inverse du dispositif antérieur connu, d'une source d'énergie supplémentaire par rapport à celle disponible sur le véhicule. En effet, d'une manière avantageuse, le vérin de manutention et le vérin de sécurité sont du type pneumatique et sont raccordés au circuit d'air de servitude équipant le véhicule.

Avantageusement, le vérin de manutention est alimenté par une pression d'air en position de relevage du dévidoir, de sorte que le vérin est apte à assurer un amortissement des sollicitations intervenant lors du roulage du véhicule et un maintien en pression constante d'un système par friction, de motorisation du tambour du dévidoir.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **fig. 1** est une vue schématique en élévation montrant le principe de fonctionnement du dispositif conforme à l'invention.

La **fig. 2** est une vue schématique en perspective montrant un exemple de réalisation d'un dispositif de manutention conforme à l'invention, équipé d'un dévidoir placé en position relevée.

La **fig. 3** est une vue en perspective montrant le dispositif de manutention conforme à l'invention, placé dans une position prête au chargement d'un dévidoir.

La **fig. 4** est un schéma pneumatique illustrant un détail caractéristique du dispositif selon l'invention.

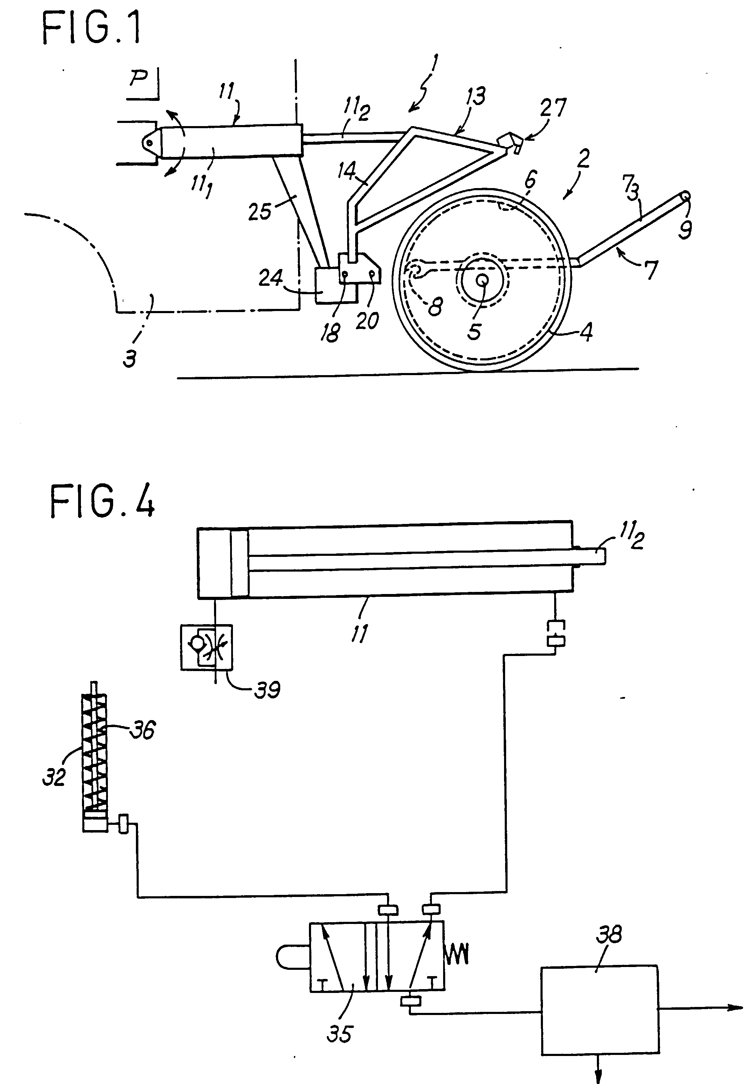

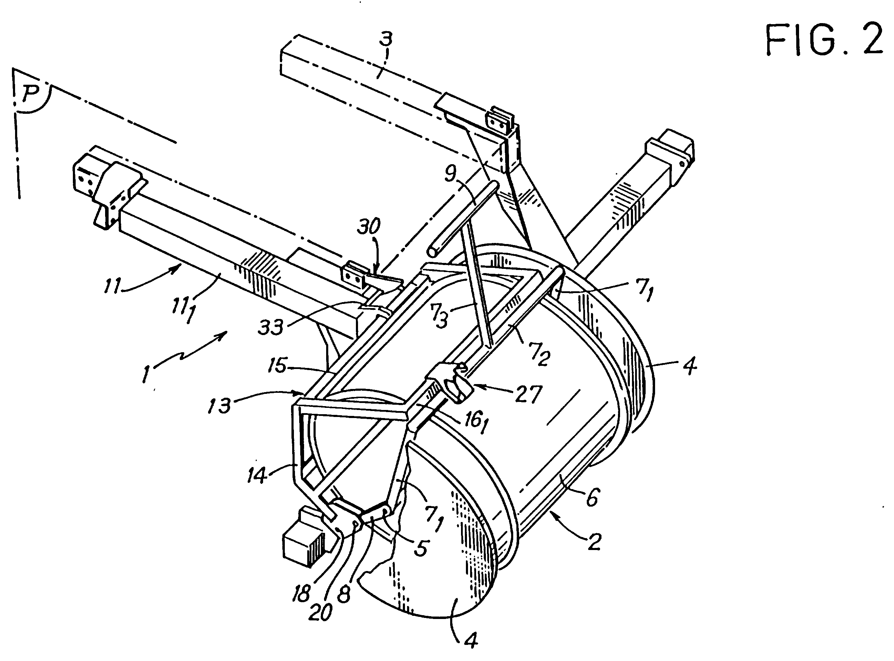

Tel que cela apparaît plus précisément aux **fig. 1** et **2**, le dispositif **1** conforme à l'invention est destiné à assurer la manutention automatique d'au moins un et, dans l'exemple illustré, de deux dévidoirs **2** destinés à être chargés et déchargés d'un véhicule **3** représenté partiellement à titre schématique. D'une manière classique, un dévidoir **2** comporte deux roues **4** montées sur un essieu **5** supportant également un tambour **6** destiné à supporter des tuyaux non représentés. L'essieu **5** est équipé d'un cadre support **7** présentant une forme générale en U et formé de deux bras **7**_{**1**} interposés, chacun, entre une roue **4** et un flasque du tambour **6**. Les parties terminales des bras **7**_{**1**}, qui dépassent l'essieu **5**, sont munies, à chacune de leur extrémité, de fourchettes de pivotement **8**, dont la fonction apparaîtra plus précisément dans la suite de la description. Les bras **7**_{**1**} sont reliés entre-eux par un longeron **7**_{**2**}, à partir duquel s'élève une flèche **7**_{**3**} terminée par une traverse **9** formant une poignée de manutention.

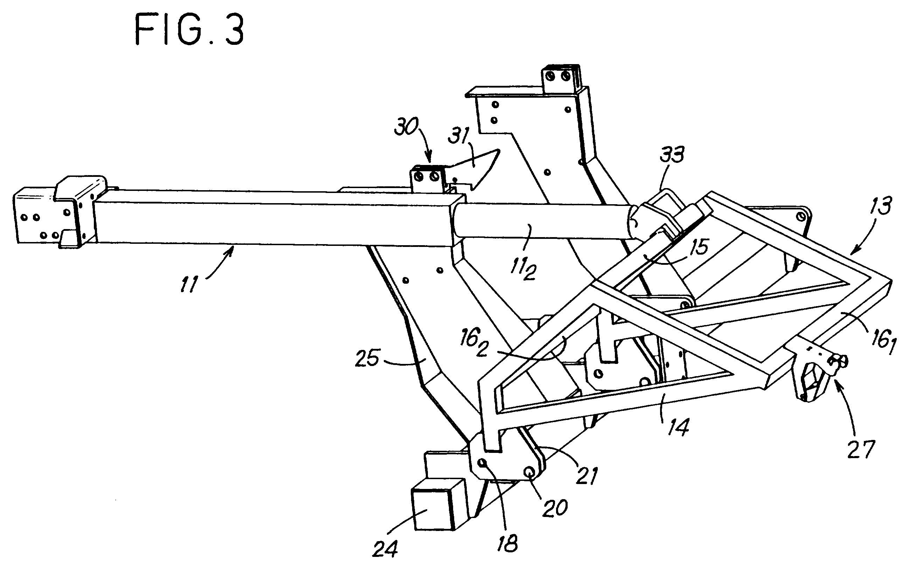

Le dispositif **1** selon l'invention comporte, pour manipuler chaque dévidoir **2**, un vérin de déplacement **11** dont le corps **11**_{**1**} est monté pivotant sur le véhicule par tous moyens appropriés, pour présenter un débattement angulaire, selon sensiblement le plan vertical **P** du véhicule. Tel que cela ressort plus précisément des **fig. 1** et **3**, le vérin **11** comporte une tige **11**_{**2**} montée articulée sur une structure **13** de prise en charge du dévidoir **2**. La structure de prise en charge **13** est montée articulée sur le véhicule pour permettre son déplacement sensiblement selon le plan vertical **P**. La structure **13** se trouve constituée par un châssis surplombant ou chevauchant, destiné à venir s'étendre, au moins partiellement, au dessus du dévidoir **2**. Dans l'exemple illustré, le châssis **13** est formé de deux cadres **14** présentant chacun une forme sensiblement triangulaire et reliés entre-eux par une traverse intermédiaire **15** sur laquelle la tige **11**_{**2**} du vérin est articulée, et une traverse d'extrémité **16**_{**1**}, dite antérieure, et une traverse d'extrémité **16**_{**2**}, dite postérieure. Chaque cadre **14** comporte, du côté de la traverse postérieure **16**_{**2**}, une articulation **18** autorisant un déplacement du châssis **13** dans le plan vertical P. Chaque cadre **14** est adapté pour supporter un axe de pivotement **20** s'étendant selon une direction horizontale par rapport au plan vertical **P** du véhicule. De préférence, chaque axe de pivotement **20** est porté par deux joues de guidage **21** séparées entre elles d'une mesure donnée pour permettre l'engagement d'une fourchette **8** du dévidoir.

Dans l'exemple illustré, le châssis **13** est monté articulé sur une poutre **24** montée transversalement sur la partie arrière du véhicule et fixée à ce dernier par une jupe déflectrice **25**. Il est à noter que la poutre **24** est adaptée pour recevoir, côte à côte, deux dispositifs de manutention **1** conformes à l'invention, dont un seul est décrit et représenté sur les dessins.

Le châssis **13** est équipé, sur sa traverse antérieure **16**_{**1**}, d'un système **27** de verrouillage du dévidoir **2** sur le châssis **13** et se trouve adapté pour être verrouillé sur le cadre **7** du dévidoir. D'une manière avantageuse, le système de verrouillage **27** est adapté pour venir se fixer sur le longeron **7**_{**2**} du cadre du dévidoir. Par exemple, le système de verrouillage **27** est à actionnement manuel, du type grenouillère à double sécurité.

Le châssis **13** est aménagé de manière, qu'en position de relevage du dévidoir **2**, un verrou de sécurité **30** vienne assurer le verrouillage du châssis **13** sur le véhicule. Le verrou de sécurité **30** comporte un loquet **31** actionné par un vérin de sécurité **32** (**fig. 4**) et destiné à retenir un étrier **33** aménagé sur la traverse intermédiaire **15** du châssis.

Selon une caractéristique avantageuse de l'invention, le vérin de sécurité **32** et le vérin de manutention **11** sont du type pneumatique et sont raccordés au circuit de servitude d'air comprimé équipant le véhicule **1**. Tel que cela apparaît plus précisément à la **fig. 4**, le vérin de manutention **11** se trouve raccordé à un distributeur **35**, de façon qu'il se trouve alimenté en pression d'air lorsque la tige **11**_{**2**} est en position rentrée. Le distributeur **35** est relié, également, au vérin de sécurité **32** qui ne se trouve pas alimenté en air, lorsque le vérin de manutention est alimenté. Dans cette position, le loquet **31** du verrou se trouve bloqué par la tige du vérin de sécurité, sollicitée élastiquement par un ressort **36**. Le distributeur **35** est relié à un circuit **38** formant avantageusement le circuit de servitude d'air comprimé du véhicule. Le circuit **38** est relié également au distributeur de commande faisant partie de l'autre dispositif de manutention.

Le fonctionnement du dispositif de manutention **1** selon l'invention découle directement de la description qui précède.

En position relevée du dévidoir **2**, tel qu'illustré à la **fig. 2**, le dévidoir **2** est fixé solidement au châssis **13** par le dispositif de verrouillage **27**. Le maintien du dévidoir **2** en position relevée, notamment lors du roulage, est assurée par le verrou de sécurité **30** et par le vérin **11**, dont la tige **11**_{**2**} est rentrée. Il est à noter que dans cette position, le vérin **11** est alimenté en pression (**fig. 4**), de sorte qu'il est à même d'assurer l'amortissement des vibrations ou des sollicitations apparaissant lors du roulage du véhicule. Le débattement angulaire du vérin dans le plan vertical est possible par le montage pivotant du vérin sur le véhicule.

Il est à noter que le dispositif de verrouillage **27** est, en général, à actionnement manuel. Aussi, pour éviter un déverrouillage inopiné du système **27**, il peut être prévu, qu'en position de relevage du dévidoir, le système **27** se trouve situé à proximité d'un organe non représenté mais empêchant sa manoeuvre.

Lors d'un déchargement du dévidoir **2**, le distributeur **35** est commandé, de sorte que le vérin de manutention **11** est mis à l'air, tandis que le vérin de sécurité **32** est alimenté en air comprimé, de façon que ce dernier assure le déverrouillage du châssis **13** par rapport au véhicule. Il est à noter que la chambre du vérin **11**, qui n'est pas raccordée au distributeur, est équipée d'un étrangleur **39** dont le réglage permet d'assurer que le verrou de sécurité **30** se trouve bien déverrouillé avant le déplacement de la tige du piston **11**. La sortie de la tige **11**_{**2**} du vérin de manutention provoque le pivotement du châssis **13** autour des axes d'articulation **18**. L'abaissement du châssis **13** conduit à la mise sur le sol des roues **4** du dévidoir sous l'effet de son propre poids et cela, quel que soit le plan de pose des roues par rapport au véhicule. En effet, le vérin de manutention n'étant pas sous pression lors de la sortie de sa tige, le dévidoir peut être déposé sur tous les profils de sol, sans être soumis à des contraintes par le vérin. La désolidarisation avec le châssis **13** est ensuite assurée par le déverrouillage du dispositif **27**. Le dévidoir **2** est alors librement retiré des axes **20** en vue de son utilisation, sans l'application d'efforts verticaux sur le dévidoir.

Lors d'une opération de chargement du dévidoir **2** sur le véhicule **1**, le dévidoir **2** est déplacé pour venir introduire les fourchettes **8** sur les axes de pivotement **20**. Cette opération s'effectue sans avoir à soulever le dévidoir. Ainsi, le dévidoir **2** se trouve engagé au moins partiellement au dessous du châssis **13**. Lors de cette opération, il est à noter que le châssis **13** peut être manoeuvré manuellement pour faciliter l'introduction du dévidoir **2** en dessous le châssis et l'engagement des fourchettes **8** sur chacun des axes de pivotement **20**. Le châssis **13** est manoeuvré manuellement pour amener la traverse antérieure **16**_{**1**} à proximité du longeron **7**_{**2**} du dévidoir pour permettre le verrouillage, par le dispositif **27**, du dévidoir **2** sur le châssis **13**. Une telle opération est relativement aisée, dans la mesure où le châssis **13** vient au-dessus chevaucher partiellement le dévidoir qui est maintenu pratiquement dans sa position de roulage normale et d'introduction des fourchettes **8** sur les axes **20**.

Après verrouillage du dévidoir **2** sur le châssis **13**, le distributeur **35** est commandé pour assurer la mise en pression du vérin de manutention **11** et la mise à l'air du vérin de sécurité **32**. La tige **11**_{**2**} du vérin rentre et assure le relevage du châssis **13** qui pivote autour des axes d'articulation **18**. En fin de course du vérin de manutention **11**, l'étrier **33** du châssis **13** se trouve bloqué par le loquet **31** du verrou de sécurité **30** (**fig. 2**).

Le dispositif de manutention **1** selon l'invention constitue ainsi un dispositif relativement simple à mettre en oeuvre et particulièrement sûr pour mener à bien les opérations de chargement et de déchargement d'un dévidoir. En effet, le dévidoir **2** se trouve toujours en position verrouillée sur la structure de prise en charge. De plus, le raccordement des vérins de sécurité **32** et de manutention **11** au circuit d'air comprimé **38** du véhicule permet de ne pas rajouter une source d'énergie supplémentaire sur le véhicule et autorise ainsi un fonctionnement qui est efficace tant que les conditions d'utilisation du véhicule sont normales. Par ailleurs, en position relevée du dévidoir **2**, le tambour **6** s'étend à proximité de la paroi arrière du véhicule autorisant ainsi le montage, sur le véhicule, d'un système de motorisation du tambour, par exemple, par friction. Il est à noter que le vérin **11** est à même de maintenir le système de motorisation par friction, en pression constante, dans la mesure où le vérin de manutention est sous pression en position de relevage du dévidoir. Une telle disposition garantit un fonctionnement efficace du système à fixation de motorisation du tambour. De plus, il est à noter que les traverses **15** et **16**_{**1**} du châssis peuvent être aménagées en marche-pied pour permettre aux utilisateurs d'accéder à des équipements du véhicule, lorsque le dévidoir est en position relevée.

L'invention n'est pas limitée aux exemples décrits et représentés, car diverses modifications peuvent y être apportées sans sortir de son cadre.

## Revendications

1. Dispositif pour assurer la manutention automatique d'au moins un dévidoir (**2**) destiné à être chargé et déchargé d'un véhicule (**1**), le dispositif comportant :
- un vérin de manutention (**11**) monté sur le véhicule (**1**) et piloté par un circuit de commande (**35, 38**),
- une structure (**13**) de prise en charge du dévidoir, montée articulée sur le véhicule en étant destinée à être déplacée par le vérin (**11**) dans un plan vertical (**P**) du véhicule, la structure comportant deux axes de pivotement (**20**) pour des fourchettes (**8**) équipant le cadre (**7**) du dévidoir,
- et un système (**27**) monté sur la structure de prise en charge (**13**) et adapté pour verrouiller le dévidoir sur la structure de prise en charge,
caractérisé en ce que :
- le vérin de manutention (**11**) est monté pivotant sur le véhicule (**1**), sensiblement selon le plan vertical,
- et la structure de prise en charge (**13**) est constituée par un châssis surplombant, destiné, lorsque les fourchettes (**8**) du dévidoir sont engagées sur les axes de pivotement (**20**), à chevaucher le dévidoir (**2**), de façon que ce dernier, disposé en position de roulage, puisse être verrouillé au châssis (**13**) avant son relevage par le vérin (**11**).

2. Dispositif selon la revendication 1, caractérisé en ce qu'il comporte un verrou de sécurité (**30**) adapté pour assurer le verrouillage de la structure sur le véhicule.

3. Dispositif selon la revendication 2, caractérisé en ce que le verrou de sécurité (**30**) est piloté par un vérin dit de sécurité (**32**).

4. Dispositif selon les revendications 1 et 3, caractérisé en ce que le vérin de manutention (**11**) et le vérin de sécurité (**32**) sont du type pneumatique et sont raccordés à un circuit d'air comprimé (**38**) équipant le véhicule.

5. Dispositif selon la revendication 4, caractérisé en ce que le vérin de manutention (**11**) est alimenté par une pression d'air, en position de relevage du dévidoir, de sorte que le vérin (**11**) est apte à assurer un amortissement des vibrations et à maintenir, en pression constante, un système à friction de motorisation du tambour du dévidoir.

6. Dispositif selon la revendication 4, caractérisé en ce que le vérin de manutention (**11**) et le vérin de sécurité (**32**) sont reliés à un distributeur de commande (**35**), dont le pilotage permet, d'une part, la mise en pression du vérin de sécurité (**32**) et la mise à l'air du vérin de manutention (**11**) pour assurer, respectivement, le déverrouillage du verrou et la sortie de la tige du vérin de manutention (**11**) et, d'autre part, la mise en pression du vérin de manutention (**11**) et la mise à l'air du vérin de sécurité pour assurer, respectivement, la rentrée de la tige de manutention du vérin et le verrouillage du verrou de sécurité.

7. Dispositif selon la revendication 1, caractérisé en ce que le châssis (**13**), formant la structure de prise en charge, comporte deux cadres (**14**) reliés entre-eux par une traverse intermédiaire (**15**), sur laquelle est montée pivotante la tige (**11**_{**2**}) du vérin de manutention, et une traverse antérieure d'extrémité (**16**_{**1**}) équipée du système de verrouillage (**27**) du dévidoir.

8. Dispositif selon la revendication 7, caractérisé en ce que les traverses (**15**, **16**_{**1**}) sont aménagées pour servir de marche-pied.

9. Dispositif selon la revendication 1 ou 7, caractérisé en ce que le châssis (**13**) est articulé, par ses deux cadres (**14**), sur une poutre transversale (**24**) fixée au véhicule (**1**) par une jupe (**25**).

10. Dispositif selon la revendication 1 ou 7, caractérisé en ce que le dispositif de verrouillage (**27**) est destiné, en position de relevage du dévidoir, à venir s'étendre en relation de proximité d'un organe interdisant sa manoeuvre.
